# EUROPEAN PATENT SPECIFICATION

(11) **EP 2 565 230 B1**
(45) Date of publication and mention of the grant of the patent: **09.09.2015**
(21) Application number: 11739940.2
(22) Date of filing: 26.04.2011
(51) Int. Cl.: C08L 23/00, C08L 33/10, B01F 17/52, C08J 3/22, C08K 3/00, C08K 5/00

(54) **DISPERSANT FOR ADDITIVE FOR POLYOLEFIN RESIN, POLYOLEFIN RESIN COMPOSITION, AND MOLDED ARTICLE**
DISPERGIERMITTEL FÜR POLYOLEFINHARZE, POLYOLEFINHARZZUSAMMENSETZUNGEN UND FORMPRODUKT DARAUS
AGENT DISPERSANT DESTINÉ À UN ADDITIF POUR RÉSINE POLYOLÉFINIQUE, COMPOSITION DE RÉSINE POLYOLÉFINIQUE, ET ARTICLE MOULÉ

(30) Priority: 30.11.2010 JP 2010266014; 27.04.2010 JP 2010101638
(43) Date of publication of application: 06.03.2013
(73) Proprietor: Mitsubishi Rayon Co., Ltd., Tokyo 100-8253 (JP)
(72) Inventor: HIRAI, Shinya, Otake-shi Hiroshima 739-0693 (JP); KIURA, Masaaki, Otake-shi Hiroshima 739-0693 (JP); KASAI, Toshihiro, Otake-shi Hiroshima 739-0693 (JP); MURAKAMI, Shouko, Otake-shi Hiroshima 739-0693 (JP); MATSUI, Yuuki, Otake-shi Hiroshima 739-0693 (JP)
(74) Representative: Ter Meer Steinmeister & Partner
(86) International application number: PCT/JP2011/060181
(87) International publication number: WO 2011/096596

(56) References cited:
- EP-A1- 2 206 743
- EP-A1- 2 505 605
- WO-A1-2009/060936
- JP-A- 1 263 139
- JP-A- 6 256 531
- JP-A- 8 231 809
- JP-A- 2000 159 923
- JP-A- 2000 230 099
- JP-A- 2003 003 016
- JP-A- 2010 254 747
- JP-A- 2011 032 454

## Description

### Technical Field

The present invention relates to the use of an alkyl methacrylate-based polymer as a dispersing agent for an additive for a polyolefin-based resin, to a polyolefin-based resin composition comprising the dispersing agent, an additive for a polyolefin-based resin and a polyolefin-based resin, and to a molded article obtained by molding the polyolefin-based resin composition.

### Background Art

Olefin-based resins such as polyethylene, polypropylene and polybutene have come to serve as a class of general-purpose resins in recent years, with their uses expanding most notably in fields such as automobiles and household appliances, because of their excellent basic physical properties including lightweightness and high rigidity. Furthermore, as the need for olefin-based resins continue to diversify and involve higher functionality, olefin-based resins are increasingly being utilized in forms combined with a variety of additives.

For example, flame retardance is increasingly being required for olefin-based resins, and therefore various types of flame retardants are added to olefin-based resin materials. Of particular interest are phosphorus-based flame retardants, which are halogen-free, have low environmental load and are relatively inexpensive, and can also impart flame retardance to olefin-based resins with addition in small amounts. In Patent document 1, for example, there is proposed a method of adding a phosphoric acid salt-based flame retardant to a polypropylene resin. Also, Patent document 2 proposes a method of adding an alkyl methacrylate-based polymer composed mainly of a phosphoric acid ester-based flame retardant and a methyl methacrylate unit, to a thermoplastic resin.

However, because the dispersibility of flame retardants in olefin-based resins has not been adequate, flame retardance has not been satisfactorily exhibited.

In addition, olefin-based resins have a slow crystallization rate after hot molding, and therefore addition of crystal nucleating agents is a known strategy for enhancing the molding cycle during working and improving the rigidity and transparency of molded articles.

Examples of crystal nucleating agents that are commonly used include phosphoric acid ester metal salts, low-molecular organic compounds such as carboxylic acid ester salt-based and sorbitol-based compounds, and inorganic compounds such as talc.

However, because such crystal nucleating agents are usually in powder form, the dispersibility is inadequate especially when added to olefin-based resins, and the degree of crystallinity often fails to be satisfactorily increased. It has therefore been proposed to reduce the mean particle size of the crystal nucleating agent to no greater than 10 µm to increase dispersibility of the crystal nucleating agent (Patent document 3). Using the crystal nucleating agent as a fine powder, however, causes secondary aggregation and results in an insufficient improving effect on dispersibility.

Another known strategy is to add organic or inorganic foaming agents to olefin-based resins to lower the weight of molded articles, reduce material consumption, and improve the sound-attenuating properties and hand quality of molded articles.

Most organic or inorganic foaming agents tend to be powders, and the dispersibility is inadequate especially when they are added to olefin-based resins, making it impossible to satisfactorily achieve the intended goal. In other words, if the foaming agent is not uniformly dispersed in the olefin-based resin, aggregates of the foaming agent are formed and the foaming agent aggregates will result in creation of large air bubbles or pinholes in the foam, tending to impair the outer appearance of the foam and lower the mechanical properties of the foam.

Pigments are commonly added for coloration of olefin-based resins. However, when pigments fail to uniformly disperse in olefin-based resins, this causes the problem of uneven coloration.

Various polar components are therefore included as additives in olefin-based resins, which are non-polar resins, but the dispersibility of such additives is not adequate, and as a result, the original functions of the additives have not been sufficiently exhibited.

This problem has been countered by methods of using alkyl methacrylate-based polymers with C2-6 alkyl groups in olefin-based resins to improve the dispersibility of filler additives, such as proposed in Patent document 4, for example.

### Citation List

### Patent Literature

[Patent document 1] Japanese Unexamined Patent Publication No. 2003-26935
[Patent document 2] Japanese Unexamined Patent Publication No. 2002-249668
[Patent document 3] Japanese Unexamined Patent Publication No. 2004-83852
[Patent document 4] Japanese Unexamined Patent Publication No. 2009-270099
JP 2000 159923 A refers to an expandable resin composition containing four elements of a polyolefin resin, an inorganic filler, a chemical foaming agent and a polymer which is an alkyl (meth)acrylate homopolymer or a copolymer containing ≥5 mol% alkyl (meth)acrylate, and has 5,000-100,000 weight average molecular weight expressed in terms of polystyrene.
WO 2009/060936 Al refers to a powdery processing aid for polyolefin-based resins which contains an alkyl methacrylate-based polymer comprising an alkyl methacrylate unit, wherein an alkyl group has from 2 to 6 carbon atoms, as the major component and having a mass-average molecular weight of 150,000 to 20,000,000. Reference is further made to EP-A-250 5605= to application EP 10 833 228 referring to a processing aid for a polyolefin-based resin, a polyolefin-based resin composition containing the processing aid for a polyolefin-based resin, and a molded article obtained by molding the polyolefin-based resin composition.

### DISCLOSURE OF THE INVENTION

### Problems to be Solved by the Invention

In the method proposed in Patent document 4, however, sufficient dispersibility is not achieved for all additives for olefin resins, and it cannot be said that the effects of adding additives are sufficiently exhibited in obtained molded articles.

It is therefore an object of the present invention to provide a general-purpose dispersing agent for additives for olefin-based resins, that increases the dispersibility of various additives in olefin-based resins, and that can further increase the effects of adding the additives in obtained molded articles.

### Means for Solving the Problems

The invention is the use of an alkyl methacrylate-based polymer composed mainly of an alkyl methacrylate (a1) unit with a C2 or greater alkyl group, having a weight-average molecular weight of between 15,000 and 145,000 as measured by gel permeation chromatography, and wherein the content of the alkyl methacrylate-based polymer is 50 mass% or greater to 100 mass% of the total monomer units of the alkyl methacrylate-based polymer, as a dispersing agent (A) for an additive for a polyolefin (B)

The invention is also a polyolefin-based resin composition comprising a dispersing agent (A) for an additive for a polyolefin (B) as defined in claims 1 to 7, an additive for a polyolefin (B), and a polyolefin-based resin (C).

The invention is still further a molded article obtainable by molding the aforementioned olefin-based resin composition.

The invention is yet further a method for producing the aforementioned polyolefin-based resin composition, in which a master batch is preparable with the total amounts of the dispersing agent (A) for the additive for a polyolefin (B) and the additive for a polyolefin (B), and a portion of the polyolefin-based resin (C), and then the master batch and the remaining portion of the polyolefin-based resin (C) are combined together. Effect of the Invention

The dispersing agent for an additive for an olefin-based resin according to the invention exhibits an effect of increased dispersibility in olefin-based resins for a wide range of additives, and as a result increases the effect of adding the additives in obtained molded articles.

### Best Mode for Carrying Out the Invention

The dispersing agent (A) for an additive for an olefin-based resin (B) according to the invention comprises an alkyl methacrylate-based polymer composed mainly of an alkyl methacrylate (a1) unit with a C2 or greater alkyl group.

The alkyl methacrylate-based polymer of the invention is composed mainly of an alkyl methacrylate (a1) unit with a C2 or greater alkyl group.

The alkyl methacrylate unit of the invention is an alkyl methacrylate (a1) unit with a C2 or greater alkyl group. If the alkyl group of the alkyl methacrylate unit is C2 or greater, the dispersibility of the additive for an olefin-based resin (B) in the olefin-based resin (C) will be excellent.

Among alkyl methacrylate (a1) units with C2 or greater alkyl groups, there are preferred alkyl methacrylate units with C2-6 alkyl groups, more preferred are n-butyl methacrylate, i-butyl methacrylate, sec-butyl methacrylate or t-butyl methacrylate units, as alkyl methacrylate units with C4 alkyl groups, and most preferred is an i-butyl methacrylate unit, because these will result in excellent dispersibility of the additive for an olefin-based resin (B) in the olefin-based resin (C), and will result in excellent powder handleability of the obtained dispersing agent (A).

The alkyl methacrylate-based polymer of the invention is composed mainly of an alkyl methacrylate (a1) unit with a C2 or greater alkyl group. That is, the content of the alkyl methacrylate (a1) unit with a C2 or greater alkyl group in the alkyl methacrylate-based polymer is 50 mass% or greater, preferably 70 mass% or greater and more preferably 85 mass% or greater to 100 mass% of the total monomer units of the alkyl methacrylate-based polymer. If the content of alkyl methacrylate (a1) units of the C2 or greater alkyl group is 50 mass% or greater, the dispersibility of the additive for an olefin-based resin (B) in the olefin-based resin (C) will be excellent.

An alkyl methacrylate-based polymer comprising an alkyl methacrylate (a1) unit with a C2 or greater alkyl group at 50 mass% or greater according to the invention is obtained by polymerizing a monomer component (a) comprising at least 50 mass% of an alkyl methacrylate (a1) with a C2 or greater alkyl group.

Examples of alkyl methacrylates (a1) with C2 or greater alkyl groups include ethyl methacrylate, n-propyl methacrylate, i-propyl methacrylate, n-butyl methacrylate, i-butyl methacrylate, sec-butyl methacrylate, t-butyl methacrylate, n-hexyl methacrylate, cyclohexyl methacrylate, n-octyl methacrylate, 2-ethylhexyl methacrylate, dodecyl methacrylate and stearyl methacrylate. These alkyl methacrylates (a1) may be used alone or in combinations of 2 or more.

Of these alkyl methacrylates (a1) with C2 or greater alkyl groups, there are preferred alkyl methacrylates with C2-6 alkyl groups, there are more preferred alkyl methacrylates with C4 alkyl groups, and most preferred is i-butyl methacrylate.

With 2 or more carbon atoms, the dispersibility of the additive for an olefin-based resin (B) in the olefin-based resin (C) will be excellent. Also, if the number of carbon atoms is no greater than 6, the powder handleability of the obtained dispersing agent (A) will be excellent.

The monomer component (a) may, if necessary comprise another copolymerizable monomer (a2) in addition to the alkyl methacrylate (a1) with a C2 or greater alkyl group. Examples of such other monomers (a2) include aromatic vinyl monomers such as styrene, α-methylstyrene and chlorostyrene; (meth)acrylic acid; n-butyl acrylate; methyl (meth)acrylate; vinyl cyanide monomers such as (meta)acrylonitrile; vinyl ether monomers such as vinyl methyl ether and vinyl ethyl ether; vinyl carboxylate monomers such as vinyl acetate and vinyl butyrate; and olefins such as ethylene, propylene and butylene. Such other monomers (a2) may be used alone, or two or more may be used in combination.

As used herein, "(meth)acrylate" refers to "acrylate" or "methacrylate".

In a total of 100 mass% of the alkyl methacrylate (a1) with a C2 or greater alkyl group and another monomer (a2), the compositional ratio of the monomer component (a) is at least 50 mass% of the alkyl (meth)acrylate (a1) with a C2 or greater alkyl group and no greater than 50 mass% of the other monomer (a2), preferably at least 70 mass% of the alkyl (meth)acrylate (a1) with a C2 or greater alkyl group and no greater than 30 mass% of the other monomer (a2), and more preferably at least 85 mass% of the alkyl (meth)acrylate (a1) with a C2 or greater alkyl group and no greater than 15 mass% of the other monomer (a2).

If the alkyl methacrylate (a1) with a C2 or greater alkyl group is present at 50 mass% or greater, i.e. if the amount of the other monomer (a2) is no greater than 50 mass%, the dispersibility of the additive for an olefin-based resin (B) in the olefin-based resin (C) will be increased.

The polymerization method for the alkyl methacrylate-based polymer may be a known polymerization method such as emulsion polymerization, soap-free emulsion polymerization, micro-suspension polymerization, suspension polymerization, bulk polymerization or solution polymerization. Of these polymerization methods, emulsion polymerization, soap-free emulsion polymerization and suspension polymerization are preferred from the viewpoint of mixing of the dispersing agent (A) and the additive for an olefin-based resin (B), with emulsion polymerization being more preferred.

The particle structure for polymerization of an alkyl methacrylate-based polymer using a polymerization method that allows a particle structure to be obtained, such as emulsion polymerization or soap-free emulsion polymerization, may be a monolayer structure or a multilayer structure. If the particle structure is a multilayer structure, it is preferably no greater than a three-layer structure from the viewpoint of economy.

An emulsifier used to obtain the alkyl methacrylate-based polymer by emulsion polymerization may be any commonly known emulsifier, and for example, it may be an anionic emulsifier, nonionic emulsifier or macromolecular emulsifier, or a reactive emulsifier having a radical polymerizable unsaturated double bond in the molecule.

Examples of anionic emulsifiers include "NEWCOL 560SF®", "NEWCOL 562SF®", "NEWCOL 707SF®", "NEWCOL 707SN®", "NEWCOL 714SF®", "NEWCOL 723SF®", "NEWCOL 740SF®", "NEWCOL 2308SF®", "NEWCOL 2320SN®", "NEWCOL 1305SN®", "NEWCOL 271A®", "NEWCOL 271NH®", "NEWCOL 210®", "NEWCOL 220®", "NEWCOL RA331®", "NEWCOL RA332®" (trade names of Nippon Nyukazai Co., Ltd.); "LATEMUL B-118E®", "LEVENOL WZ®", "NEOPELEX G15®" (trade names of Kao Corp.); and "HIGHTENOL N08®" (trade name of Dai-ichi Kogyo Seiyaku Co., Ltd.).

Examples of nonionic emulsifiers include NONIPOL 200®" and NEWPOL PE-68®" (trade names of Sanyo Chemical Industries, Ltd.).

Examples of macromolecular emulsifiers include polyvinyl alcohol, polyhydroxyethyl (meth)acrylate, polyhydroxypropyl (meth)acrylate and polyvinylpyrrolidone.

Examples of reactive emulsifiers include reactive anion emulsifiers such as "ANTOX MS-60®" and "ANTOX MS-2N®" (trade names of Nippon Nyukazai Co., Ltd.); "ELEMINOL JS-2®" (trade name of Sanyo Chemical Industries, Ltd.); "LATEMUL S-120®", "LATEMUL S-180®", "LATEMUL S-180A®" and "LATEMUL PD-104®" (Kao Corp.); "ADEKA REASOAP SR-10®" and "ADEKA REASOAP SE-10®" (trade names of Adeka Corp.); "AQUALON KH-05®", "AQUALON KH-10®" and "AQUALON HS-10®" (trade names of Dai-ichi Kogyo Seiyaku Co., Ltd.); and reactive nonionic emulsifiers such as "ADEKA REASOAP NE-10®", "ADEKA REASOAP ER-10®", "ADEKA REASOAP NE-20®", "ADEKA REASOAP ER-20®", "ADEKA REASOAP NE-30®", "ADEKA REASOAP ER-30®", "ADEKA REASOAP NE-40®" and "ADEKA REASOAP ER-40®" (trade names of Adeka Corp.); and "AQUALON RN-10®", "AQUALON RN-20®", "AQUALON RN-30®" and "AQUALON RN-50®" (trade names of Dai-ichi Kogyo Seiyaku Co., Ltd.).

Such emulsifiers may be used alone, or two or more may be used in combination.

A polymerization initiator used to obtain an alkyl methacrylate-based polymer may be any publicly known radical polymerization initiator.

Examples of radical polymerization initiators include persulfuric acid salt-based compounds such as potassium persulfate, sodium persulfate and ammonium persulfate; oil soluble azo-based compounds such as azobisisobutyronitrile, 2,2'-azobis(2-methylbutyronitrile), 2,2'-azobis(2,4-dimethylvaleronitrile), 2,2'-azobis(4-methoxy-2,4-dimethylvaleronitrile) and 2-phenylazo-4-methoxy-2,4-dimethylvaleronitrile; water-soluble azo-based compounds such as 2,2'-azobis{2-methyl-N-[1,1-bis(hydroxymethyl)-2-hydroxyethyl]propionamide}, 2,2'-azobis{2-methyl-N-[2-(1-hydroxyethyl)]propionamide}, 2,2'-azobis{2-methyl-N-[2-(1-hydroxybutyl)]propionamide}, 2,2'-azobis[2-(5-methyl-2-imidazolin-2-yl)propane] and salts thereof, 2,2'-azobis[2-(2-imidazolin-2-yl)propane] and salts thereof, 2,2'-azobis[2-(3,4,5,6-tetrahydropyrimidin-2-yl)propane] and salts thereof, 2,2'-azobis{2-[1-(2-hydroxyethyl)-2-imidazolin-2-yl]propane} and salts thereof, 2,2'-azobis(2-methylpropionamidine) and salts thereof, 2,2'-azobis(2-methylpropionamidine) and salts thereof, and 2,2'-azobis[N-(2-carboxyethyl)-2-methylpropionamidine] and salts thereof; and organic peroxides such as benzoyl peroxide, cumene hydroperoxide, t-butyl hydroperoxide, t-butylperoxy-2-ethyl hexanoate and t-butyl peroxyisobutyrate.

Such radical polymerization initiators may be used alone, or two or more may be used in combination. For polymerization by an emulsion polymerization method, a reducing agent such as sodium bisulfite, ferrous sulfate or an ascorbic acid salt may be used in combination with the aforementioned radical polymerization initiator.

The method of forming a powder of the alkyl methacrylate-based polymer is not particularly restricted and may be appropriately selected depending on the method of polymerization. For example, if the alkyl methacrylate-based polymer is to be obtained by emulsion polymerization, the method of forming a powder of the alkyl methacrylate-based polymer may be, for example, a coagulation method, a spray dry method, a centrifugal separation method or a freeze-drying method. Preferred among these powderization methods are coagulation methods and spray dry methods, from the viewpoint of homogeneity of the obtained alkyl methacrylate-based polymer powder.

When an alkyl methacrylate-based polymer latex is to be powderized using a coagulation method, the alkyl methacrylate-based polymer latex may be contacted with a coagulating agent at 30°C to 90°C for coagulation while stirring to form a slurry, which is then dehydrated to dryness to form a powder of the alkyl methacrylate-based polymer. Examples of coagulating agents for a coagulation method include inorganic acids such as hydrochloric acid, sulfuric acid, nitric acid and phosphoric acid; organic acids such as formic acid and acetic acid; inorganic salts such as aluminum sulfate, magnesium sulfate and calcium sulfate; and organic salts such as calcium acetate.

When a spray dry method is to be used to form a powder of the alkyl methacrylate-based polymer latex, the alkyl methacrylate-based polymer latex may be subjected to spray-drying with a spray drier under conditions with an inlet temperature of 120°C to 220°C and an outlet temperature of 40°C to 90°C, to form a powder of the alkyl methacrylate-based polymer. The outlet temperature is preferably 40°C to 80°C and more preferably 40°C to 70°C, from the viewpoint of the shredding property for the primary particles of the alkyl methacrylate-based polymer powder.

The alkyl methacrylate-based polymer of the invention may be the same polymer used alone, or two or more polymers with different compositions, molecular weights or particle sizes may be used in combination.

The weight-average molecular weight of the alkyl methacrylate-based polymer of the invention is between 15,000 and 145,000, preferably between 20,000 and 130,000 and more preferably between 25,000 and 100,000. If the weight-average molecular weight of the alkyl methacrylate-based polymer is 15,000 or greater, the powder handleability of the obtained dispersing agent (A) will be excellent. If the weight-average molecular weight of the alkyl methacrylate-based polymer is no greater than 145,000, the dispersibility of the additive for an olefin-based resin (B) in the olefin-based resin (C) will be excellent.

The weight-average molecular weight of the alkyl methacrylate-based polymer is measured by gel permeation chromatography (GPC).

The tetrahydrofuran-soluble portion of the alkyl methacrylate-based polymer was provided as specimen for measurement of the molecular weight using GPC.

The measuring conditions for GPC were as follows, and the weight-average molecular weight was determined from a calibration curve prepared using standard polystyrene.
Apparatus: HLC8220, Tosoh Corp.
Column: "TSKgel SuperMultipore HZ-H®" by Tosoh Corp. (4.6 mm inner diameter x 15 cm length x 2, exclusion limit: 4 x 10⁷ (estimated))
Eluent: THF
Eluent flow rate: 0.35 ml/min
Measuring temperature: 40°C
Sample injection rate: 10 µl (sample concentration: 0.1%)

The method of adjusting the weight-average molecular weight of the alkyl methacrylate-based polymer is not particularly restricted, and for example, it may be a method of adjusting the amount of polymerization initiator or a method of adjusting the amount of chain transfer agent.

Examples of chain transfer agents include mercaptanes such as n-dodecylmercaptane, t-dodecylmercaptane, n-octylmercaptane, n-tetradecylmercaptane, n-hexylmercaptane and n-butylmercaptane; halogenated compounds such as carbon tetrachloride and ethylene bromide; and α-methylstyrene dimers.

Such chain transfer agents may be used alone, or two or more may be used in combination.

The amount of chain transfer agent used may be appropriately adjusted depending on the weight-average molecular weight of the alkyl methacrylate-based polymer, the type of chain transfer agent used, and the compositional ratio of the monomers.

The dispersing agent (A) of the invention may also comprise an antiblocking agent such as AEROSIL^{R} if necessary in addition to the alkyl methacrylate-based polymer.

The olefin-based resin composition of the invention comprises a dispersing agent (A) according to the invention, and an additive for an olefin-based resin (B) and an olefin-based resin (C).

The dispersing agent (A) of the invention comprises an alkyl methacrylate-based polymer according to the invention. The dispersing agent (A) of the invention performs the function of increasing the dispersibility of the additive for an olefin-based resin (B), when the additive for an olefin-based resin (B) is added to the olefin-based resin (B).

The additive for an olefin-based resin (B) according to the invention may be any known additive for an olefin-based resin. The additive for an olefin-based resin (B) may be a flame retardant, crystal nucleating agent, foaming agent, pigment, filler, stabilizer, lubricant, or flame-retardant aid.

Flame retardants include bromine-based flame retardants, phosphoric acid salt-based flame retardants, phosphoric acid ester-based flame retardants, metal hydroxide-based flame retardants, nitrogen-based flame retardants, silicone-based flame retardants and hindered amine-based flame retardants.

Examples of bromine-based flame retardants include "FR-1025M®", "FR-1524®", "FR-2124®", "F-2016®", "F-2300®", "F-2310®" and "F-2300H®" (trade names of ICL-IP, Japan); FLAMECUT 120G®", "FLAMECUT 121K®" and "FLAMECUT 122K®" (trade names of Tosoh Corp.); and "SAYTEX RB-100®", "SAYTEX BT-93®", "SAYTEX BT-93W®", "SAYTEX 8010®" and "SAYTEX HP-7010P®" (trade names of Albemarle Japan Corp.).

Examples of phosphoric acid salt-based flame retardants include "ADEKASTAB FP-2100J®", "ADEKASTAB FP-2200" and "ADEKASTAB FP-2200S®" (trade names of Adeka Corp.); and "FIRECUT P770®" (trade name of Suzuhiro Chemical Co., Ltd.).

Examples of phosphoric acid ester-based flame retardants include "TPP®", "TCP®", "TXP®", "CDP®", "CR-733S®", "CR-741®", "PX-200®", "TMCPP®", "CR-900®", "CR-509®", "CR-530®" and "CR-504L®" (trade names of Daihachi Chemical Industry Co., Ltd.); and "ADEKASTAB PFR®", "ADEKASTAB FP-500®" and "ADEKASTAB FP-600®" (trade names of Adeka Corp.).

Examples of metal hydroxide-based flame retardants include flame retardants composed mainly of magnesium hydroxide, flame retardants composed mainly of aluminum hydroxide, and mixtures thereof.

Examples of nitrogen-based flame retardants include flame retardants composed mainly of melamine cyanurate.

Examples of silicone-based flame retardants include silicone oil-based flame retardants with straight-chain molecular structures, and silicone resin-based flame retardants with crosslinked structures.

Examples of hindered amine-based flame retardants include hindered amine compounds with NOR structures, and specifically "FLAMESTAB NOR 116FF®" (trade name of Ciba, Japan).

Such flame retardants may be used alone, or two or more may be used in combination.

Preferred among these flame retardants, from the viewpoint of excellent dispersibility of the flame retardant in the olefin-based resin (C), are phosphoric acid salt-based flame retardants and phosphoric acid ester-based flame retardants, with phosphoric acid salt-based flame retardants being more preferred.

The compositional ratio of the olefin-based resin (C) and the flame retardant may be appropriately set according to the type of flame retardant and the level of flame retardance required, but preferably the content of the olefin-based resin (C) is 30 to 97 mass% and the content of the flame retardant is 3 to 70 mass%, and more preferably the content of the olefin-based resin (C) is 50 to 95 mass% and the content of the flame retardant is 5 to 50 mass%, of the total 100 mass% of the olefin-based resin (C) and the flame retardant.

The crystal nucleating agent is not particularly restricted so long as it is one that is commonly used as a crystal nucleating agent for olefin-based resins, including inorganic compounds such as talc, and preferred examples are the sorbitol-based compounds and organic phosphoric acid ester metal salts mentioned below.

Examples of sorbitol-based compounds include 1·3,2·4-dibenzylidenesorbitol, 1·3,2·4-bis(4-methylbenzylidene)sorbitol, 1·3,2·4-bis(4-ethylbenzylidene)sorbitol, 1·3,2·4-bis(2',4'-dimethylbenzylidene)sorbitol, 1,3-(4-methylbenzylidene)-2·4-benzylidenesorbitol, 1·3-(2',4'-dimethylbenzylidene)-2·4-benzylidenesorbitol, 1·3-benzylidene-2·4-(2',4'-dimethylbenzylidene)sorbitol, 1·3,2 ·4-bis(3',4'-dimethylbenzylidene)sorbitol and 1·3-(4-chlorbenzylidene)-2·4-(4-methylbenzylidene)sorbitol. Any of these may be used alone or in combinations of two or more.

Examples of organic phosphoric acid ester metal salts include sodium-2,2'-methylene-bis(4,6-di-t-butylphenyl) phosphate, sodium-2,2'-ethylidene-bis(4,6-dit-butylphenyl) phosphate, lithium-2,2'-methylene-bis(4,6-di-t-butylphenyl)phosphate, lithium-2,2'-ethylidene-bis(4,6-di-t-butylphenyl)phosphate, calcium-bis[2,2'-methylene-bis(4,6-di-t-butylphenyl)phosphate], magnesium-bis[2,2'-methylene-bis(4,6-di-t-butylphenyl)phosphate], aluminum-tris[2,2'-methylene-bis(4,6-di-t-butylphenyl)phosphate], 2,2'-methylenebis(4,6-di-t-butylphenyl)phosphate basic aluminum salt, and aluminum bis(2,4,8,10-tetra-t-butyl-hydroxy-12H-dibenzo[d, g][1,3,2]dioxaphosphocin-6-oxide) hydroxide. Any of these may be used alone or in combinations of two or more.

Other crystal nucleating agents include metal salts of aromatic carboxylic acids or aliphatic carboxylic acids, and specifically aluminum benzoate salt, aluminum p-t-butylbenzoate salt, or sodium adipate, sodium thiophenecarboxylate and sodium pyrrolecarboxylate. Any of these may be used alone or in combinations of two or more.

The compositional ratio of the olefin-based resin (C) and the crystal nucleating agent is preferably such that the content of the olefin-based resin (C) is 95 to 99.99 mass% and the content of the crystal nucleating agent is 0.01 to 5 mass%, and more preferably the content of the olefin-based resin (C) is 97 to 99.95 mass% and the content of the crystal nucleating agent is 0.05 to 3 mass%, of the total 100 mass% of the olefin-based resin (C) and the crystal nucleating agent.

If the content of the crystal nucleating agent is at least 0.01 mass%, the mechanical properties of the obtained molded article will be improved. Also, if the content of the crystal nucleating agent is no greater than 5 mass%, it will be possible to minimize outer appearance defects due to non-dispersed particles of the crystal nucleating agent.

The foaming agent is not particularly restricted so long as it is one commonly used as a foaming agent for olefin-based resins, and it may be a reacting type or a thermal decomposing type, and either inorganic or organic. These may be used alone or in combinations of two or more, in ranges that do not interfere with the effect of the invention.

Reacting types include inorganic chemical foaming agents such as mixtures of sodium hydrogencarbonate (sodium bicarbonate) and an acid such as citric acid; and organic chemical foaming agents such as isocyanate compounds.

Thermal decomposing types include inorganic chemical foaming agents such as sodium hydrogencarbonate, ammonium hydrogencarbonate, ammonium carbonate, zinc carbonate, sodium nitrate and sodium citrate; and organic chemical foaming agents such as azo compounds, nitroso compounds, sulfonyl hydrazide compounds, sulfonyl semicarbazide compounds, triazole compounds and tetrazole compounds.

Specific examples of organic chemical foaming agents include azodicarbonamide (ADCA), barium azodicarboxylate (Ba-AC), N,N'-dinitrosopentamethylenetetramine (DPT), azobisisobutyronitrile (AIBN), p,p'-oxybisbenzenesulfonyl hydrazide (OBSH), p-toluenesulfonyl hydrazide (TSH), 5-phenyltetrazole (5-PT) and diazoaminobenzene.

Foaming agents may be either the reacting types or thermal decomposing types mentioned above, but are preferably thermal decomposing types.

The compositional ratio of the olefin-based resin (C) and the foaming agent is preferably such that the content of the olefin-based resin (C) is 75 to 99.9 mass% and the content of the foaming agent is 0.1 to 25 mass%, and more preferably the content of the olefin-based resin (C) is 90 to 99.5 mass% and the content of the foaming agent is 0.5 to 10 mass%, of the total 100 mass% of the olefin-based resin (C) and the foaming agent.

If the foaming agent content is at least 0.1 mass%, a foam molded article with a sufficient expansion ratio will be obtained for the molded article. Also, if the content of the foaming agent is no greater than 25 mass%, it will be possible to minimize outer appearance defects due to non-dispersed particles of the foaming agent.

The pigment is not particularly restricted so long as it is one that is commonly used as a pigment for olefin-based resins, and examples include organic pigments such as azo-based, phthalocyanine-based, quinacridone-based, dioxazine-based, perylene-based and isoindolinone-based pigments, and inorganic pigments such as titanium oxide, iron oxide red, red lead, carbon black, iron black, ultramarine blue and cobalt blue. These organic pigments or inorganic pigments may be used alone or in combinations of two or more.

The compositional ratio of the olefin-based resin (C) and the pigment may be appropriately set depending on the purpose of use of the molded article to be obtained, but it is preferably such that the content of the olefin-based resin (C) is 95 to 99.99 mass% and the content of the pigment is 0.01 to 5 mass%, and more preferably the content of the olefin-based resin (C) is 98 to 99.95 mass% and the content of the pigment is 0.05 to 2 mass%, of the total 100 mass% of the olefin-based resin (C) and the pigment.

If the pigment content is at least 0.01 mass%, a coloring effect will be obtained for the molded article that is obtained. Also, if the content of the pigment is no greater than 5 mass%, it will be possible to minimize outer appearance defects due to non-dispersed particles of the pigment.

Examples of fillers include calcium carbonate, talc, glass fiber, carbon fibers, magnesium carbonate, mica, kaolin, calcium sulfate, barium sulfate, titanium white, white carbon, carbon black, magnesium hydroxide and aluminum hydroxide.

Such fillers may be used alone, or two or more may be used in combination.

Stabilizers include phenol-based antioxidants such as pentaerythrityl-tetrakis[3-(3,5-di-t-butyl-4-hydroxyphenyl)propionate] and triethylene glycol-bis[3-(3-t-butyl-5-methyl-4-hydroxyphenyl)propionate]; phosphorus-based antioxidants such as tris(monononylphenyl)phosphite and tris(2,4-di-t-butylphenyl)phosphite; sulfur-based antioxidants such as dilaurylthiodipropionate; hindered amine-based light stabilizers such as "TINUVIN-770®" (trade name of Ciba, Japan) and "ADEKASTAB LA-57®" (trade name of Adeka Corp.); and ultraviolet absorbers such as "TINUVIN 1577FF®" (trade name of Ciba, Japan) and "ADEKASTAB LA-32®" (trade name of Adeka Corp.).

Such stabilizers may be used alone, or two or more may be used in combination.

Examples of lubricants include sodium, calcium or magnesium salts of laurylic acid, palmitic acid, oleic acid and stearic acid.

Such lubricants may be used alone, or two or more may be used in combination.

Examples of flame-retardant aids include metal oxides such as zinc oxide; and hydroxyl-containing compounds such as pentaerythritol.

Such flame-retardant aids may be used alone, or two or more may be used in combination.

The olefin-based resin (C) according to the invention may be any known olefin-based resin. Examples of olefin-based resins (C) include polypropylene (PP), high-density polyethylene (HDPE), low-density polyethylene (LDPE), straight-chain low-density polyethylene (LLDPE), poly-1-butene, polyisobutylene, ethylene-propylene random copolymers or block copolymers, ethylene-propylene-1-butene random copolymers or block copolymers, ethylene-propylene-diene terpolymers, copolymers of ethylene or propylene with cyclopentadiene, and random copolymers, block copolymers or graft polymers with addition of a vinyl-based monomer such as vinyl acetate, methacrylic acid ester, acrylic acid ester or an aromatic vinyl monomer at no greater than 50 mass% with respect to ethylene or propylene. Such olefin-based resins (C) may be used alone, or two or more may be used in combination.

The content of the dispersing agent (A) in the olefin-based resin composition of the invention may be appropriately set depending on the type of additive for an olefin-based resin (B), but it is preferably 0.01 to 35 parts by weight, more preferably between 0.1 and 25 parts by weight, even more preferably between 0.2 part by weight and 10 parts by weight and most preferably between 0.3 and 5 parts by weight, with respect to 100 parts by weight as the total of the olefin-based resin (C) and the additive for an olefin-based resin (B).

If the content of the dispersing agent (A) is at least 0.01 part by weight, the dispersibility of the additive for an olefin-based resin (B) in the olefin-based resin (C) will be excellent. Also, if the content of the dispersing agent (A) is no greater than 35 parts by weight, it will be possible to increase dispersibility of the additive for an olefin-based resin (B) without altering the basic properties of the olefin-based resin.

The olefin-based resin composition of the invention may also comprise a polytetrafluoroethylene-containing resin (D) in addition to the dispersing agent (A), the additive for an olefin-based resin (B) and the olefin-based resin (C) of the invention.

By including a polytetrafluoroethylene-containing resin (D) in the olefin-based resin composition of the invention, it is possible to prevent dripping of the obtained molded article during combustion. A polytetrafluoroethylene-containing resin (D) is most preferably included in the olefin-based resin composition of the invention when a phosphoric acid salt-based flame retardant that forms a foamed carbonization layer to impart flame retardance is used as the olefin-based additive (B), because polytetrafluoroethylene will contribute to formation of a foamed layer.

Polytetrafluoroethylene is a homopolymer of tetrafluoroethylene, or a copolymer of a monomer mixture composed mainly of tetrafluoroethylene.

Monomers other than tetrafluoroethylene in a monomer mixture may be, for example, hexafluoropropylene, chlorotrifluoroethylene, fluoroalkylethylene or perfluoroalkylvinyl ether.

Such monomers may be used alone, or two or more may be used in combination.

The weight-average molecular weight of the polytetrafluoroethylene is preferably between 1,000,000 and 50,000,000 and more preferably between 3,000,000 and 30,000,000.

If the weight-average molecular weight of the polytetrafluoroethylene is 1,000,000 or greater, the flame retardance of the obtained molded article will be excellent. Also, if the weight-average molecular weight of the polytetrafluoroethylene is no greater than 50,000,000, the dispersibility of the flame retardant in the olefin-based resin composition will be excellent.

The polytetrafluoroethylene-containing resin (D) of the invention may be unmodified polytetrafluoroethylene, with no modification of the polytetrafluoroethylene, or it may be modified polytetrafluoroethylene obtained by modification of polytetrafluoroethylene.

Examples of unmodified polytetrafluoroethylene products include "TEFLON^{R} T5®", "TEFLON^{R} T6®", "TEFLON^{R} 6C®", "TEFLON^{R} 6C-J®", "TEFLON^{R} 6J®", "TEFLON^{R} 7A®", "TEFLON^{R} 7J®", "TEFLON^{R} 30®", "TEFLON^{R} 30B®", "TEFLON^{R} 30J®", "TEFLON^{R} 30N®", "TEFLON^{R} 100®", "TEFLON^{R} 110®", "TEFLON^{R} 120®", "TEFLON^{R} 327®" and "TEFLON^{R} 850®" (trade names of DuPont Corp.); "FLUON G201®", "FLUON G307®", "FLUON CD1®", "FLUON CD141®", "FLUON CD123®", "FLUON CD076®", "FLUON CD090®", "FLUON AD911L®", "FLUON AD983L®", "FLUON G163®", "FLUON G192®" and "FLUON G307®" (trade names of Asahi Glass Co., Ltd.); and "POLYFLON MPA FA-500C®" (trade name of Daikin Industries, Ltd.). Modified polytetrafluoroethylene products include "METABLEN A-3000®", "METABLEN A-3800®", "METABLEN A-3750®" and "METABLEN A-3700®" (trade names of Mitsubishi Rayon Co., Ltd.); "BLENDEX 449®" (trade name of Chemtura Corp.); "AD-001®" and "CX-500®" (trade names of Shandong Dongyue Co., Ltd.); and "SN-3300®", "SN-3300B2®" and "SN-3300B3®" (trade names of ShinePolymer Co., Ltd.).

These polytetrafluoroethylene-containing resins (D) may be used alone, or two or more different ones may be used in combination regardless of modification.

The content of the polytetrafluoroethylene-containing resin (D) is preferably between 0.01 and 5 parts by weight, more preferably between 0.05 and 3 parts by weight, and even more preferably between 0.1 and 2 parts by weight, with respect to 100 parts by weight as the total of the olefin-based resin (C) and the flame retardant.

If the content of the polytetrafluoroethylene-containing resin (D) is at least 0.01 part by weight, the flame retardance of the obtained molded article will be excellent. If the content of the polytetrafluoroethylene-containing resin (D) is no greater than 5 parts by weight, it will be possible to easily accomplish extrusion molding without excess load during melt kneading of the olefin-based resin composition.

The method of mixing the olefin-based resin composition may employ known melt kneading such as extrusion kneading or roll kneading.

The melt kneading method is not particularly restricted, and the dispersing agent (A) of the invention, the additive for an olefin-based resin (B), the olefin-based resin (C) and, if necessary, the polytetrafluoroethylene-containing resin (D), may be simultaneously melt kneaded, or the total amount of the dispersing agent (A) and the additive for an olefin-based resin (B) may be melt kneaded with a portion of the olefin-based resin (C) to produce a master batch, and then the master batch melt kneaded with the remaining portion of the olefin-based resin (C), and also the polytetrafluoroethylene-containing resin (D) if necessary.

The melt kneading temperature may be appropriately set according to the type of olefin-based resin (C). The melt kneading temperature is preferably 160°C to 280°C and more preferably 180°C to 240°C.

The molded article of the invention is obtained by molding an olefin-based resin composition of the invention.

The molding method used may be any known molding method, such as extrusion molding, injection molding, calender molding, blow molding, hot molding, foam molding or melt spinning.

The molded article of the invention is suitable as a sheet material for an optical sheet, as a film material for a food film, or for an automobile member, household appliance member, medical member or architectural member. Embodiments of the invention are as follows:
[1] Use of an alkyl methacrylate-based polymer composed mainly of an alkyl methacrylate (a1) unit with a C2 or greater alkyl group, having a weight-average molecular weight of between 15,000 and 145,000 as measured by gel permeation chromatography, and wherein the content of the alkyl methacrylate-based polymer is 50 mass% or greater to 100 mass% of the total monomer units of the alkyl methacrylate-based polymer, as a dispersing agent (A) for an additive for a polyolefin (B).
[2] Use according to [1], wherein the (a1) unit is an alkyl methacrylate unit wherein the alkyl group is C4.
[3] Use according to [1], wherein the (a1) unit is an i-butyl methacrylate unit.
[4] Use according to any one of [1] to [3], wherein the additive for a polyolefin (B) is at least one type selected from among flame retardants, crystal nucleating agents, foaming agents and pigments.
[5] Use according to any one of [1] to [3], wherein the additive for a polyolefin (B) is at least one type selected from among flame retardants and crystal nucleating agents.
[6] Use according to any one of [1] to [5], wherein the alkyl methacrylate-based polymer has a weight-average molecular weight of between 15,000 and 100,000.
[7] Use according to any one of [1] to [5], wherein the alkyl methacrylate-based polymer has a weight-average molecular weight of between 30,000 and 100,000.
[8] A polyolefin-based resin composition comprising a dispersing agent (A) for an additive for a polyolefin (B) according to any one of [1] to [7], an additive for a polyolefin (B), and a polyolefin-based resin (C).
[9] A polyolefin-based resin composition according to [8], wherein the additive for a polyolefin (B) is at least one type selected from among flame retardants, crystal nucleating agents, foaming agents and pigments.
[10] A polyolefin-based resin composition according to [8], wherein the additive for a polyolefin (B) is at least one type selected from among flame retardants and crystal nucleating agents.
[11] A polyolefin-based resin composition according to any one of [8] to [10], wherein the polyolefin-based resin (C) is a polypropylene resin.
[12] A molded article obtainable by molding a polyolefin-based resin composition according to any one of [8] to [11].
[13] A method for producing a polyolefin-based resin composition according to any one of [8] to [11], in which a master batch is preparable with the total amount of the dispersing agent (A) for the additive for a polyolefin (B) and the total amount of the additive for a polyolefin (B), and a portion of the polyolefin-based resin (C), and then the master batch and the remaining portion of the polyolefin-based resin (C) are combined together.
[14] The method for producing a polyolefin-based resin composition according to [13], wherein the additive for a polyolefin (B) is at least one type selected from among flame retardants, crystal nucleating agents, foaming agents and pigments.

### [Examples]

The present invention will now be explained in more specific detail through the following examples, with the understanding that the invention is in no way limited to the examples. The "parts" and "%" values in the examples refer to "parts by mass" and "mass%".

### (1) Weight-average molecular weight

The tetrahydrofuran-soluble portion of the alkyl methacrylate-based polymer was provided as a sample for measurement of the molecular weight using gel permeation chromatography (GPC).

The measuring conditions for GPC were as follows, and the weight-average molecular weight was determined from a calibration curve prepared using standard polystyrene.
Apparatus: HLC8220, Tosoh Corp.
Column: "TSKgel SuperMultipore HZ-H" by Tosoh Corp. (4.6 mm inner diameter x 15 cm length x 2, exclusion limit: 4 x 10⁷ (estimated))
Eluent: THF
Eluent flow rate: 0.35 ml/min
Measuring temperature: 40°C
Sample injection rate: 10 µ1 (sample concentration: 0.1%)

### (2) Dispersibility of flame retardant (number of non-dispersed flame retardant particles)

The number of non-dispersed particles of the flame retardant in the obtained molded article (film) was evaluated. The evaluation procedure was conducted by observing the molded article using a stereomicroscope, counting the number of non-dispersed particles of the flame retardant exceeding 100 µm per visual field (6 mm x 8 mm), observing 10 visual fields, and then determining the mean number of non-dispersed particles per visual field, judging the dispersibility based on the following criteria.
G: No more than 15 non-dispersed flame retardant particles per visual field
P: More than 15 non-dispersed flame retardant particles per visual field

### (3) Flame retardance (ignition resistance)

The obtained molded article (a 1.59-mm (1/16-inch) test rod) was used for a combustion test in a test environment of 23 ±2°C, a flame size of 20 mm, a flame contact time of 10 seconds and a measuring frequency of 5 times, judging the combustibility on the following criteria.
G: No ignition of test rod during any of the 5 flame contacts.
P: Ignition and combustion of test rod by at least one flame contact.

### (4) Flame retardance (total combustion heat value)

The total combustion heat value of an obtained molded article (100 x 100 x 3 mm test piece) up to an elapse of 500 seconds after ignition using a cone-calorie meter (Model C3 by Toyo Seiki Seisakusho, Ltd.) was determined, under conditions with radiant heat of 50 KW/m². A smaller total combustion heat value is judged as a lower flame and higher flame retardance.

### (5) Flame retardance (UL94)

An obtained molded article (1.59 mm (1/16-inch) test rod) was used to judge the flame retardance based on the UL94 standard. The test, in general, was as follows.

The flame of a gas burner was contacted with the bottom edge of a vertically-held sample for 10 seconds. If combustion ceased within 30 seconds, contact was continued for an additional 10 seconds. The test was conducted 5 times for each sample, and judgment was made on the following scale.
"V-0": All of the following conditions were satisfied.
1. No sample continued to undergo combustion for 10 seconds or longer after flame contact.
2. Total combustion time for 10 flame contacts with 5 samples did not exceed 50 seconds.
3. No sample suffered combustion up to the position of the anchoring clamp.
4. No sample dropped combustion particles that ignited absorbent cotton placed under the sample.
5. No sample continued to exhibit red heat for 30 seconds or longer after the second flame contact.
"V-1": All of the following conditions were satisfied.
1. No sample continued to undergo combustion for 30 seconds or longer after flame contact.
2. Total combustion time for 10 flame contacts with 5 samples did not exceed 250 seconds.
3. No sample suffered combustion up to the position of the anchoring clamp.
4. No sample dropped combustion particles that ignited absorbent cotton placed under the sample.
5. No sample continued to exhibit red heat for 60 seconds or longer after the second flame contact.
"V-2": All of the following conditions were satisfied.
1. No sample continued to undergo combustion for 30 seconds or longer after flame contact.
2. Total combustion time for 10 flame contacts with 5 samples did not exceed 250 seconds.
3. No sample suffered combustion up to the position of the anchoring clamp.
4. Dropping of combustion particles that ignited absorbent cotton placed under the sample was within acceptable range.
5. No sample continued to exhibit red heat for 60 seconds or longer after the second flame contact. "Failure": The above criteria were not satisfied.

### (6) Dispersibility of crystal nucleating agent (number of non-dispersed crystal nucleating agent particles)

The number of non-dispersed crystal nucleating agent particles present in a molded article (width x length x thickness = 50 mm x 100 mm x 2 mm) was evaluated. The evaluation procedure was conducted by observing the molded article using a stereomicroscope, counting the number of non-dispersed particles of the crystal nucleating agent exceeding 50 µm per visual field (2 mm x 3 mm), observing 10 visual fields, and then determining the mean number of non-dispersed particles per visual field, evaluating the dispersibility based on the following criteria.
G: No more than one non-dispersed crystal nucleating agent particle per visual field
P: More than one non-dispersed crystal nucleating agent particle per visual field

### (7) Mechanical properties (flexural modulus)

The flexural modulus of the molded article was measured according to JIS K-7171. The molded article used was a test piece obtained by injection molding (80 mm length, 10 m thickness, 4 mm width).

### (8) Dispersibility of foaming agent (number of non-dispersed foaming agent particles)

Extrusion molding was performed under the following temperature conditions in which the foaming agent did not decompose, and the number of non-dispersed foaming agent particles present in the obtained strand (diameter: 2 mm) was evaluated. The evaluation procedure was conducted by observing the strand using a stereomicroscope, counting the number of non-dispersed particles of the foaming agent exceeding 100 µm per 10 cm of strand length, observing 10 arbitrary locations, and then determining the mean number of non-dispersed particles per 10 cm of strand length, evaluating the dispersibility based on the following criteria.
G: No more than 5 non-dispersed foaming agent particles per 10 cm
P: More than 5 non-dispersed foaming agent particles per 10 cm

### (9) Foam molding property

The number of coarse air bubbles present in a foam molded article was evaluated. The evaluation procedure was conducted by observing a cross-section of the foam molded article using a stereomicroscope, counting the number of coarse air bubbles exceeding 0.4 mm per cross-section (diameter: φ5 mm), observing 10 arbitrary locations, and then determining the mean number of coarse air bubbles per cross-sectional area, judging the dispersibility based on the following criteria. Coarse air bubbles exceeding 0.4 mm affect the outer appearance of a molded article.
G: No more than 1 coarse air bubble per cross-section
P: More than 1 coarse air bubble per cross-section

### (10) Molded outer appearance (number of non-dispersed pigment particles)

The number of non-dispersed pigment particles present in a molded sheet (width x thickness = 80 mm x 0.3 mm) was evaluated. The evaluation procedure was conducted by observing the molded sheet using a stereomicroscope, counting the number of non-dispersed pigment particles exceeding 200 µm for blue pigments and white pigments and exceeding 500 µm for black pigments, per 100 cm², performing observation across 1000 cm² (10 locations of 100 cm²), and then determining the mean number of non-dispersed particles per 100 cm², evaluating the dispersibility based on the following criteria. Non-dispersed pigment particles exceeding 200 µm for blue pigments and white pigments or 500 µm for black pigments are visually discernible as lumps, and affect the outer appearance of a molded article.
G: No more than 5 non-dispersed pigment particles per 100 cm².
P: More than 5 non-dispersed pigment particles per 100 cm².

### [Production Example 1]

Into a separable flask (5 liter volume) equipped with a thermometer, nitrogen inlet tube, condenser tube and stirrer there were charged 225 parts (2250 gram) of ion-exchanged water, 2.5 parts of sodium dodecylbenzenesulfonate, 0.0002 part of ferrous sulfate, 0.0006 part of ethylenediamine disodium tetraacetate and 0.48 part of ascorbic acid, and the separable flask interior was exchanged with nitrogen. The internal temperature was then raised to 73°C, a mixture of 0.2 part of cumene hydroperoxide, 1.5 parts of n-octylmercaptane, 98 parts of i-butyl methacrylate and 2 parts of n-butyl acrylate was added dropwise over a period of 1 hour, and the mixture was held at the same temperature for 1 hour to obtain an alkyl methacrylate-based polymer latex.

The obtained alkyl methacrylate-based polymer latex was cooled to 25°C, and after adding it dropwise to 500 parts of hot water at 70°C containing 5 parts of calcium acetate, the temperature was raised to 90°C for coagulation. After separating and rinsing the obtained coagulate, it was dried at 60°C for 12 hours to obtain an alkyl methacrylate-based polymer powder. The weight-average molecular weight of the obtained alkyl methacrylate-based polymer was 20,000.

The obtained alkyl methacrylate-based polymer powder was used as dispersing agent (A1).

### [Production Examples 2 to 8]

Alkyl methacrylate-based polymer powders were obtained in the same manner as Production Example 1, except for changing the monomer component composition and chain transfer agent amount as shown in Table 1.

The obtained alkyl methacrylate-based polymer powders were used as dispersing agents (A2) to (A8) .

### [Production Example 9] Production of master batch (M1)

After mixing 10 parts of dispersing agent (A2) and 70 parts of a phosphoric acid salt-based flame retardant (B2) "ADEKASTAB FP-2100J" (trade name of Adeka Corp.) by hand-blending, the mixture was supplied to an extruder using a feeder 1 (apparatus name: "Model CE-T-1", Kubota Corp.) at a rate of 4.8 kg/hr. Also, the polypropylene resin "NOVATEC PP FY-4®" (product of Japan Polypropylene Corp., melt flow rate: 5 g/10 min) was supplied to an extruder using a feeder 2 (apparatus name: "ALS-254" (Sangyo-Kiden Co., Ltd.)) at a rate of 1.2 kg/hr. The extruder used was a φ26 mm co-rotating twin screw extruder (apparatus name: "TEM-26SS" (Toshiba Corp.), L/D = 64.6), and melt kneading was carried out under conditions with a screw rotational speed of 200 rpm and a cylinder temperature of 180°C, to obtain a master batch (M1). The compositional ratio of the obtained master batch (M1) was flame retardant (B2)/PP resin/dispersing agent (A2) = 70/20/10 (mass%).

### [Production Examples 10 and 11] Production of master batches (M2, M3)

Master batches (M2) and (M3) were obtained in the same manner as Production Example 9, except for changing the type and amount of dispersing agent and the amount of olefin-based resin as shown in Table 2. The compositional ratio was changed by adjusting the supply rates of feeders 1 and 2, with a total supply rate of 6.0 kg/hr for feeders 1 and 2.

**[Table 1]**

| | | Prod. Example 1 | Prod. Example 2 | Prod. Example 3 | Prod. Example 4 | Prod. Example 5 | Prod. Example 6 | Prod. Example 7 | Prod. Example 8 |
|---|---|---|---|---|---|---|---|---|---|
| Alkyl methacrylate-based polymer | | (A1) | (A2) | (A3) | (A4) | (A5) | (A6) | (A7) | (A8) |
| Monomer component (a) [parts] | i-BMA | 98 | 98 | 98 | - | 58 | - | 98 | 98 |
| | n-BMA | - | - | - | 98 | - | - | - | - |
| | n-BA | 2 | 2 | 2 | 2 | 2 | - | 2 | 2 |
| | MMA | - | - | - | - | 40 | 100 | - | - |
| Chain transfer agent [parts] | | 1.5 | 1 | 0.5 | 0.5 | 0.5 | 1 | 0.1 | 0.02 |
| Weight-average mol. wt. | | 20,000 | 30,000 | 50,000 | 50,000 | 50,000 | 30,000 | 170,000 | 800,000 |

The symbols in Table 1 are the following.
i-BMA: i-Butyl methacrylate
n-BMA: n-Butyl methacrylate
n-BA: n-Butyl acrylate
MMA: Methyl methacrylate

**[Table 2]**

| | | Prod. Example 9 | Prod. Example 10 | Prod. Example 11 |
|---|---|---|---|---|
| Master batch | | (M1) | (M2) | (M3) |
| Dispersing agent (A) [%] | (A2) | 10 | | |
| | (A6) | | 10 | |
| Olefin-based resin (C) [%] | | 20 | 20 | 30 |
| Flame retardant (B) [%] | (B2) | 70 | 70 | 70 |

### [Examples 1 to 5, Comparative Examples 1 to 4]

A dispersing agent (A), flame retardant (B) and olefin-based resin (C) were combined in the proportions listed in Table 3, and mixed by hand-blending. Next, a φ30 mm co-rotating twin screw extruder (apparatus name: "BT-30" by Research Laboratory of Plastics Technology Co., Ltd., L/D = 30) was used for melt kneading under conditions with a screw rotational speed of 200 rpm and a cylinder temperature of 200°C, to obtain an olefin-based resin composition.

The olefin-based resin (C) used was the polypropylene resin "NOVATEC FY-4®" (trade name of Japan Polypropylene Corp., melt flow rate: 5 g/10 min), and the flame retardant (B1) used was the phosphoric acid salt-based flame retardant "ADEKASTAB FP-2200®" (trade name of Adeka Corp.).

The obtained olefin-based resin composition was subjected to injection molding using a 100 t injection molding machine (apparatus name: "SE-100DU", product of Sumitomo Heavy Industries, Ltd.) under conditions with a molding temperature of 200°C, to obtain a molded article (1.59 mm (1/16-inch) test rod). This was used as a test piece for an ignition resistance test.

The obtained olefin-based resin composition was also subjected to injection molding using a 100 t injection molding machine (apparatus name: "SE-100DU", product of Sumitomo Heavy Industries, Ltd.) under conditions with a molding temperature of 200°C, to obtain a molded article (100 x 100 x 3 mm corner plate). This was used as a test piece for evaluation of the total combustion heat value.

The obtained molded article (1.59 mm (1/16-inch) test rod) was pressed using a hydraulic molding machine (product of Shoji Tekkojo Co., Ltd.), with a procedure of 5 minutes preheating, 5 minutes pressing and 5 minutes cooling, under conditions with a molding temperature of 190°C and a molding pressure of 10 MPa, to obtain a molded article (film) with a thickness of 50 µm. This was used as a test film for evaluation of the flame retardant dispersibility.

The dispersibility evaluation results, ignition resistance evaluation results and total combustion heat value evaluation results are shown in Table 3.

**[Table 3]**

| | | Example 1 | Example 2 | Example 3 | Example 4 | Example 5 | Comp. Ex. 1 | Comp. Ex. 2 | Comp. Ex. 3 | Comp. Ex. 4 |
|---|---|---|---|---|---|---|---|---|---|---|
| Dispersing agent (A) [parts] | (A1) | 2 | - | - | - | - | - | - | - | - |
| | (A2) | - | 2 | - | - | - | - | - | - | - |
| | (A3) | - | - | 2 | - | - | - | - | - | - |
| | (A4) | - | - | - | 2 | - | - | - | - | - |
| | (A5) | - | - | - | - | 2 | - | - | - | - |
| | (A6) | - | - | - | - | - | 2 | - | - | - |
| | (A7) | - | - | - | - | - | - | 2 | - | - |
| | (A8) | - | - | - | - | - | - | - | 2 | - |
| Olefin-based resin (C) [parts] | | 82 | 82 | 82 | 82 | 82 | 82 | 82 | 82 | 82 |
| Flame retardant (B) [parts] | (B1) | 18 | 18 | 18 | 18 | 18 | 18 | 18 | 18 | 18 |
| Dispersibility | Judgment | G | G | G | G | G | P | P | P | P |
| | Count (no./48 mm²) | 5.8 | 3.6 | 6.4 | 9.8 | 12.8 | 47.2 | 17.4 | 18.2 | 25.2 |
| Flame retardance | Ignition resistance | G | G | G | G | G | P | P | P | P |
| | Total combustion heat value (MWsec/m²) | 28.3 | 26.1 | 29.2 | 30.2 | 31.9 | 32.9 | 61.7 | 62**.**0 | 62.9 |

### [Example 6, Comparative Examples 5 and 6]

Olefin-based resin compositions were obtained in the same manner as Example 1, except for changing the dispersing agent (A), flame retardant (B), olefin-based resin (C) and polytetrafluoroethylene-containing resin (D) mixing compositions to the composition shown in Table 4.

The polytetrafluoroethylene-containing resin (D) used was the modified polytetrafluoroethylene "METABLEN A-3800®" (trade name of Mitsubishi Rayon Co., Ltd.).

The obtained olefin-based resin composition was used to obtain a molded article (1.59 mm (1/16-inch) test rod) by the same method as Example 1. This was used as a test piece for a flame retardance (UL94) test.

The obtained molded article (1.59 mm (1/16-inch) test rod) was also used to obtain a molded article (film) by the same method as Example 1. This was used as a test film for evaluation of the flame retardant dispersibility.

The dispersibility evaluation results and flame retardance (UL94) evaluation results are shown in Table 4.

**[Table 4]**

| | | Example 6 | Comp. Ex. 5 | Comp. Ex. 6 |
|---|---|---|---|---|
| Dispersing agent (A) [parts] | (A2) | 2 | - | - |
| | (A6) | - | 2 | - |
| Thermoplastic resin (C) [parts] | | 82 | 82 | 82 |
| Flame retardant (B) [parts] | (B1) | 18 | 18 | 18 |
| Polytetrafluoroethylene-containing resin (D) [parts] | | 0.2 | 0.2 | 0.2 |
| Dispersibility evaluation results | Judgment | G | P | P |
| | Count .(no. /48 mm²) | 3.8 | 55.6 | 31.6 |
| Flame retardance (UL94) evaluation results | Judgment | V-0 | Unacceptable | Unacceptable |

### [Example 7, Comparative Examples 7 and 8]

A master batch (M1-3) comprising a dispersing agent (A), flame retardant (B) and olefin-based resin (C) was mixed with an olefin-based resin (C) in the proportions listed in Table 5, and mixed by hand-blending. The olefin-based resin (C) used was the polypropylene resin "NOVATEC FY-4" (trade name of Japan Polypropylene Corp., melt flow rate: 5 g/10 min).

This was subjected to injection molding using a 100 t injection molding machine (apparatus name: "SE-100DU", product of Sumitomo Heavy Industries, Ltd.) under conditions with a molding temperature of 200°C, to obtain a molded article (1.59 mm (1/16-inch) test rod). This was used as a test piece for a flame retardance (UL94) test.

The obtained molded article (1.59 mm (1/16-inch) test rod) was also used to obtain a molded article (film) by the same method as Example 1. This was used as a test film for evaluation of the flame retardant dispersibility.

The dispersibility evaluation results and flame retardance (UL94) evaluation results are shown in Table 5.

**[Table 5]**

| | | Example 7 | Comp. Ex. 7 | Comp. Ex. 8 |
|---|---|---|---|---|
| Master batch [parts] (Dispersing agent (A) [%]) | (M1) | 37 (A2:3.7) | | |
| | (M2) | | 37 (A6:3.7) | |
| | (M3) | | | 37 |
| Olefin-based resin (C) [parts] (Olefin-based resin (C) [%]) | | 63 (C:70.4) | 63 (C:70.4) | 63 (C:74.1) |
| (Flame retardant (B2) [%]) | | (B2:25.9) | (B2:25.9) | (B2:25.9) |
| Dispersibility | Evaluation | G | P | P |
| | Count (no. /48mm²) | 4.3 | 60.2 | 31.2 |
| Flame retardance (UL94) evaluation results | Judgment | V-0 | Unacceptable | Unacceptable |

As seen in Tables 3, 4 and 5, the molded articles obtained in Examples 1 to 5 that incorporated a dispersing agent comprising an alkyl methacrylate-based polymer of the invention had excellent flame retardant dispersibility and flame retardance. The molded article obtained in Example 6 which incorporated a polytetrafluoroethylene-containing resin (D) also had excellent flame retardant dispersibility and flame retardance. In addition, the molded article obtained in Example 7 which employed a master batch similarly had excellent flame retardant dispersibility and flame retardance.

On the other hand, the molded article of Comparative Example 1, which incorporated a dispersing agent comprising an alkyl methacrylate-based polymer composed mainly of a methyl methacrylate unit, as a C1 alkyl group outside of the range of the invention, had inferior flame retardant dispersibility and flame retardance. Also, the molded article obtained in Comparative Example 5 which incorporated a polytetrafluoroethylene-containing resin (D) also had inferior flame retardant dispersibility, and inferior flame retardance. Furthermore, the molded article obtained in Comparative Example 7 which employed a master batch similarly had inferior flame retardant dispersibility and inferior flame retardance.

The molded articles obtained in Comparative Examples 2 and 3, which incorporated a dispersing agent comprising an alkyl methacrylate-based polymer with a weight-average molecular weight of 170,000 or 800,000, which was outside of the range of the invention, also had inferior flame retardant dispersibility and inferior flame retardance. The molded articles obtained in Comparative Examples 4, 6 and 8, which did not incorporate a dispersing agent comprising an alkyl methacrylate-based polymer, similarly had inferior flame retardant dispersibility and inferior flame retardance.

### [Example 8]

There were combined 99.5 parts of the polypropylene-based resin "NOVATEC-PP FY-4®" (trade name of Japan Polypropylene Corp., melt flow rate: 5 g/10 min) as an olefin-based resin (C), 0.5 part of the sorbitol-based crystal nucleating agent 1·3,2·4-dibenzylidenesorbitol or 1·3,2·4-bis(4-methylbenzylidene)-D-sorbitol, "GEL ALL MD®" (trade name of New Japan Chemical Co., Ltd.) as a crystal nucleating agent (B) and 0.5 part of a dispersing agent (A2), and the mixture was mixed by hand-blending. Next, extrusion molding was carried out with a φ30 mm co-rotating twin screw extruder (apparatus name: "BT-30" by Research Laboratory of Plastics Technology Co., Ltd., L/D = 30) under conditions with a screw rotational speed of 200 rpm and a cylinder temperature of 200°C, to obtain olefin-based resin composition pellets.

The obtained pellets were then subjected to injection molding using an injection molding machine (apparatus name: "SE-100DU", product of Sumitomo Heavy Industries, Ltd.) under conditions with a molding temperature of 200°C and a die temperature of 60°C, to obtain a molded article.

### [Examples 9 and 10, Comparative Examples 9 to 11, Reference Example 1]

Molded articles were obtained in the same manner as Example 8, except for changing the mixing composition to the compositions listed in Table 6.

The dispersibility (number of non-dispersed crystal nucleating agent particles) and flexural modulus of each of the molded articles obtained in Examples 8 to 10, Comparative Examples 9 to 11 and Reference Example 1 are shown in Table 6.

**[Table 6]**

| | | | Example 8 | Example 9 | Example 10 | Comp. Ex. 9 | Comp. Ex. 10 | Comp. Ex. 11 | Ref. Ex. 1 |
|---|---|---|---|---|---|---|---|---|---|
| Polyolefin-based resin (C) | PP | [parts] | 99.5 | 99.5 | 99.5 | 99.5 | 99.5 | 99.5 | 100 |
| Crystal nucleating agent (B) | GEL ALL MD | [parts] | 0.5 | 0.5 | 0.5 | 0.5 | 0.5 | 0.5 | - |
| Dispersing agent (A) | | Type | (A2) | (A3) | (A4) | (A6) | (A7) | - | - |
| | | [parts] | 0.5 | 0.5 | 0.5 | 0.5 | 0.5 | - | - |
| Dispersibility | No. of non-dispersed particles | [no./ field] | 0.2 | 0.4 | 0.7 | 13.7 | 10.5 | 40.3 | 0 |
| | Evaluation | | G | G | G | P | P | P | G |
| Flexural modulus [MPa] | | | 1790 | 1790 | 1780 | 1750 | 1750 | 1700 | 1500 |

The symbols in Table 6 represent the following compounds.
PP: Polypropylene (trade name: "NOVATEC FY-4®" by Japan Polypropylene Corp.)
GEL ALL MD: Sorbitol-based crystal nucleating agent (trade name: "GEL ALL MD®" by New Japan Chemical Co., Ltd.)

### [Examples 11 to 13, Comparative Examples 12 to 14]

Molded articles were obtained by the same method as Example 8, except for changing the crystal nucleating agent (B) to the phosphoric acid ester metal salt-based crystal nucleating agent sodium-2,2'-methylene-bis(4,6-di-t-butylphenyl)phosphate "ADEKASTAB NA-11®" (trade name of Adeka Corp.), and changing the mixing composition to the compositions listed in Table 7.

The dispersibility (number of non-dispersed crystal nucleating agent particles) and flexural modulus of each of the molded articles obtained in Examples 11 to 13, Comparative Examples 12 to 14 and Reference Example 1 are shown in Table 7.

**[Table 7]**

| | | | Example 11 | Example 12 | Example 13 | Comp. Ex. 12 | Comp. Ex. 13 | Comp. Ex. 14 | Ref. Ex. 1 |
|---|---|---|---|---|---|---|---|---|---|
| Polyolefin-based resin (C) | PP | [parts] | 99.5 | 99.5 | 99.5 | 99.5 | 99.5 | 99.5 | 100 |
| Crystal nucleating agent (B) | NA-11 | [parts] | 0.5 | 0.5 | 0.5 | 0.5 | 0.5 | 0.5 | - |
| Dispersing agent (A) | | Type | (A2) | (A3) | (A4) | (A6) | (A7) | - | - |
| | | [parts] | 0.5 | 0.5 | 0.5 | 0.5 | 0.5 | - | - |
| Dispersibility | No. of non-dispersed particles | [no./ field] | 0.1 | 0.3 | 0.5 | 30.3 | 11.5 | 12.7 | 0 |
| | Evaluation | | G | G | G | P | P | P | G |
| Flexural modulus [MPa] | | | 1950 | 1950 | 1940 | 1900 | 1920 | 1920 | 1500 |

The symbols in Table 7 represent the following compounds.
PP: Polypropylene (trade name, "NOVATEC FY-4®" by Japan Polypropylene Corp.)
NA-11: Phosphoric acid ester metal salt-based crystal nucleating agent "ADEKASTAB NA-11®" (trade name of Adeka Corp.)

As seen in Tables 6 and 7, the molded articles obtained in Examples 8 to 13 that incorporated a dispersing agent comprising an alkyl methacrylate-based polymer of the invention had excellent crystal nucleating agent dispersibility and flexural modulus for the molded articles. On the other hand, Comparative Examples 11 and 14 which did not comprise a dispersing agent of the invention had inferior crystal nucleating agent dispersibility and flexural modulus for the molded articles. Also, the molded articles of Comparative Examples 9 and 12, which incorporated a dispersing agent comprising an alkyl methacrylate-based polymer composed mainly of a methyl methacrylate unit, as a C1 alkyl group outside of the range of the invention, had inferior crystal nucleating agent dispersibility and flexural modulus for the molded articles. Also, the molded articles obtained in Comparative Examples 10 and 13, which incorporated a dispersing agent comprising an alkyl methacrylate-based polymer with a weight-average molecular weight of 170,000, which was outside of the range of the invention, also had inferior crystal nucleating agent dispersibility and flexural modulus for the molded articles. The flexural modulus was inferior in Reference Example 1, which did not comprise a crystal nucleating agent.

### [Example 14]

There were combined 99 parts of the polypropylene-based resin "NOVATEC-PP FY-4®" (trade name of Japan Polypropylene Corp., melt flow rate: 5 g/10 min) as an olefin-based resin (C), 1 part of the azodicarbonamide "VINYFOR AC#3®" (trade name of Eiwa Chemical Ind. Co., Ltd.) as a foaming agent (B) and 1 part of a dispersing agent (A2), and the mixture was mixed by hand-blending. Next, extrusion molding was carried out with a φ25 mm single-screw extruder (apparatus name: "TP-25" by Thermoplastics Ind. Co., Ltd., L/D = 20) under conditions with a screw rotational speed of 30 rpm and a cylinder temperature of 180°C, to obtain olefin-based resin composition strands and pellets.

The obtained pellets were then subjected to extrusion foam molding with a φ25 mm single-screw extruder (apparatus name: "TP-25" by Thermoplastics Ind. Co., Ltd., L/D = 20) mounting a circular die, under conditions with a screw rotational speed of 30 rpm and a cylinder temperature of 220°C, to obtain a cylindrical foam molded article (diameter: 5 mm).

### [Examples 15 and 16, Comparative Examples 15 to 17, Reference Example 2]

Strands and pellets of olefin-based resin compositions were obtained in the same manner as Example 14, except for changing the mixing composition to the compositions listed in Table 8.

The obtained pellets were then used to obtain cylindrical foam molded articles (diameter: 5 mm) in the same manner as Example 14.

The dispersibility (number of non-dispersed foaming agent particles) and foam molding property evaluation results for each of the olefin-based resin compositions obtained in Examples 14 to 16, Comparative Examples 15 to 17 and Reference Example 2 are shown in Table 8.

**[Table 8]**

| | | | Example 14 | Example 15 | Example 16 | Comp. Ex. 15 | Comp. Ex. 16 | Comp. Ex. 17 | Ref. Ex. 2 |
|---|---|---|---|---|---|---|---|---|---|
| Polyolefin-based resin (C) | PP | [parts] | 99 | 99 | 99 | 99 | 99 | 99 | 100 |
| Foaming agent (B) | ADCA | [parts] | 1 | 1 | 1 | 1 | 1 | 1 | - |
| Dispersing agent (A) | | Type | (A2) | (A3) | (A4) | (A6) | (A7) | - | - |
| | | [parts] | 1 | 1 | 1 | 1 | 1 | - | - |
| Dispersibility | No. of non-dispersed particles | [no./10cm] | 0.9 | 1.5 | 2.6 | 23.3 | 18.4 | 225 | 0 |
| | Evaluation | | G | G | G | P | P | P | - |
| Foam moldability | No. of coarse air bubbles | [no./cross-section] | 0.6 | 0.7 | 0.9 | 5.2 | 4.6 | 7.2 | - |
| | Evaluation | | G | G | G | P | P | P | - |

The symbols in Table 8 represent the following compounds.
PP: Polypropylene (trade name, "NOVATEC-PP FY-4®" by Japan Polypropylene Corp.)
ADCA: Azodicarbonamide (trade name: "VINYFOR AC#3®" by Eiwa Chemical Ind. Co., Ltd.)

### [Examples 17 to 19, Comparative Examples 18 to 20, Reference Example 3]

Strands and pellets of olefin-based resin compositions were obtained in the same manner as Example 14, except for changing the olefin-based resin (C) to the polyethylene-based resin "NOVATEC-PE UR350®" trade name of Japan Polyethylene Corp., melt flow rate: 5 g/10 min), the foaming agent (B) to the sodium hydrogencarbonate "CELLBORN SC-K®" (trade name of Eiwa Chemical Ind. Co., Ltd.) and the cylinder temperature to 140°C, and changing the mixing composition to the compositions listed in Table 9.

The obtained pellets were then used to obtain cylindrical foam molded articles (diameter: 5 mm) in the same manner as Example 14, except for changing the cylinder temperature to 180°C.

The dispersibility (number of non-dispersed foaming agent particles) and foam molding property evaluation results for each of the olefin-based resin compositions obtained in Examples 17 to 19, Comparative Examples 18 to 20 and Reference Example 3 are shown in Table 9.

**[Table 9]**

| | | | Example 17 | Example 18 | Example 19 | Comp. Ex. 18 | Comp. Ex. 19 | Comp. Ex. 20 | Ref. Ex. 3 |
|---|---|---|---|---|---|---|---|---|---|
| Polyolefin-based resin (C) | PE | [parts] | 99 | 99 | 99 | 99 | 99 | 99 | 100 |
| Foaming agent (B) | Sodium bicarbonate | [parts] | 1 | 1 | 1 | 1 | 1 | 1 | - |
| Dispersing agent (A) | | Type | (A2) | (A3) | (A4) | (A6) | (A7) | - | - |
| | | [parts] | 1 | 1 | 1 | 1 | 1 | - | - |
| Dispersibility | No. of non-dispersed particles | [no./10cm] | 1.2 | 1.6 | 2.2 | 29.6 | 24.0 | 54.4 | 0 |
| | Evaluation | | G | G | G | P | P | P | - |
| Foam moldability | No. of coarse air bubbles | [no./cross-section] | 0.1 | 0.2 | 0.4 | 2.9 | 2.6 | 3.2 | - |
| | Evaluation | | G | G | G | P | P | P | - |

The symbols in Table 9 represent the following compounds.
PE: Polyethylene (trade name, "NOVATEC-PE UR350®" by Japan Polyethylene Corp.)
Sodium bicarbonate: Sodium hydrogencarbonate (trade name: "CELLBORN SC-K®" by Eiwa Chemical Ind. Co., Ltd.)

As seen in Tables 8 and 9, the olefin-based resin compositions obtained in Examples 14 to 19 that incorporated a dispersing agent comprising an alkyl methacrylate-based polymer of the invention had excellent foaming agent dispersibility in the strands and excellent foam molding properties. On the other hand, the olefin-based resin compositions obtained in Comparative Examples 17 and 20 which did not comprise a dispersing agent of the invention had inferior foaming agent dispersibility in the strands and inferior foam molding properties. The olefin-based resin compositions of Comparative Examples 15 and 18, which incorporated a dispersing agent comprising an alkyl methacrylate-based polymer composed mainly of a methyl methacrylate unit, as a C1 alkyl group outside of the range of the invention, had inferior dispersibility of the foaming agent in the strands and inferior foam molding properties. Also, the olefin-based resin compositions obtained in Comparative Examples 16 and 19, which incorporated a dispersing agent comprising an alkyl methacrylate-based polymer with a weight-average molecular weight of 170,000, which was outside of the range of the invention, had inferior dispersibility of the foaming agent in the strands and inferior foam molding properties.

### [Example 20]

There were combined 99.5 parts of the polypropylene-based resin "NOVATEC-PP FY-4®" (trade name of Japan Polypropylene Corp., melt flow rate: 5 g/10 min) as an olefin-based resin (C), 0.5 part of the blue pigment "Ultramarine Blue 1900®" (trade name of Daiichi-Kasei Co., Ltd.) as a pigment (B) and 0.5 part of a dispersing agent (A2), and the mixture was mixed by hand-blending. This was followed by extrusion molding with a φ25 mm single-screw extruder (apparatus name: "TP-25" by Thermoplastics Ind. Co., Ltd., L/D = 20) mounting a T-die, under conditions with a screw rotational speed of 30 rpm and a cylinder temperature of 190°C, to obtain a molded sheet.

### [Examples 21 and 22, Comparative Examples 21 to 23]

Molded sheets were obtained in the same manner as Example 20, except for changing the mixing composition to the compositions listed in Table 10.

The evaluation results for the molded outer appearances (numbers of non-dispersed pigment particles) of the molded sheets obtained in Examples 20 to 22 and Comparative Examples 21 to 23 are shown in Table 10.

**[Table 10]**

| | | | Example 20 | Example 21 | Example 22 | Comp. Ex. 21 | Comp. Ex. 22 | Comp. Ex. 23 |
|---|---|---|---|---|---|---|---|---|
| Polyolefin-based resin (C) | PP | [parts] | 99.5 | 99.5 | 99.5 | 99.5 | 99.5 | 99.5 |
| Pigment (B) | Ultramarine blue | [parts] | 0.5 | 0.5 | 0.5 | 0.5 | 0.5 | 0.5 |
| Dispersing agent (A) | | Type | (A2) | (A3) | (A4) | (A6) | (A7) | - |
| | | [parts] | 0.5 | 0.5 | 0.5 | 0.5 | 0.5 | - |
| Dispersibility | No. of non-dispersed particles | [no./100cm²] | 0.8 | 1.0 | 3.4 | 52 | 44 | 375 |
| | Evaluation | | G | G | G | P | P | P |

The symbols in Table 10 represent the following compounds.
PP: Polypropylene (trade name, "NOVATEC-PP FY-4®" by Japan Polypropylene Corp.)
Ultramarine blue: Blue pigment (trade name, "Ultramarine Blue 1900®" by Daiichi-Kasei Co., Ltd.)

### [Example 23, Comparative Examples 24 and 25]

Molded sheets were obtained in the same manner as Example 20, except for changing the mixing composition to the compositions listed in Table 11.

As pigment (B) there was used a white pigment (titanium oxide) "R-830®" (trade name of Ishihara Sangyo Kaisha, Ltd.).

The evaluation results for the molded outer appearances (numbers of non-dispersed pigment particles) of the molded sheets obtained in Example 23 and Comparative Examples 24 and 25 are shown in Table 11.

**[Table 11]**

| | | | Example 23 | Comp. Ex. 24 | Comp. Ex. 25 |
|---|---|---|---|---|---|
| Polyolefin-based resin (C) | PP | [parts] | 99.5 | 99.5 | 99.5 |
| Pigment (B) | Titanium oxide | [parts] | 0.5 | 0.5 | 0.5 |
| Dispersing agent (A) | | Type | (A2) | (A6) | - |
| | | [parts] | 0.5 | 0.5 | - |
| Dispersibility | No. of non-dispersed particles | [no. /100cm²] | 0.6 | 14.4 | 225 |
| | Evaluation | | G | P | P |

The symbols in Table 11 represent the following compounds.
PP: Polypropylene (trade name, "NOVATEC-PP FY-4®" by Japan Polypropylene Corp.)
Titanium oxide: White pigment "R-830®" (trade name of Ishihara Sangyo Kaisha, Ltd.).

### [Example 24, Comparative Examples 26 and 27]

Molded sheets were obtained in the same manner as Example 20, except for changing the mixing composition to the compositions listed in Table 12.

As pigment (B) there was used a black pigment (carbon black) "CB960®" (trade name of Mitsubishi Chemical Corp.).

The evaluation results for the molded outer appearances (numbers of non-dispersed pigment particles) of the molded sheets obtained in Example 24 and Comparative Examples 26 and 27 are shown in Table 12.

**[Table 12]**

| | | | Example 24 | Comp. Ex. 26 | Comp. Ex. 27 |
|---|---|---|---|---|---|
| Polyolefin-based resin (C) | PP | [parts] | 99.5 | 99.5 | 99.5 |
| Pigment (B) | Carbon black | [parts] | 0.5 | 0.5 | 0.5 |
| Dispersing agent (A) | | Type | (A2) | (A6) | - |
| | | [parts] | 0.5 | 0.5 | - |
| Dispersibility | No. of non-dispersed particles | [no./100cm²] | 0.4 | 6.2 | 8.8 |
| | Evaluation | | G | P | P |

The symbols in Table 12 represent the following compounds.
PP: Polypropylene (trade name, "NOVATEC-PP FY-4®" by Japan Polypropylene Corp.)
Carbon black: Black pigment (trade name, "CB960®" of Mitsubishi Chemical Corp.).

As seen in Tables 10 to 12, the molded sheets obtained in Examples 20 to 24 that incorporated a dispersing agent comprising an alkyl methacrylate-based polymer of the invention had excellent pigment dispersibility and satisfactory molded outer appearance. On the other hand, the molded sheets obtained in Comparative Examples 23, 25 and 27, which did not comprise a dispersing agent of the invention, had inferior pigment dispersibility and inferior molded outer appearance. Also, the molded sheets of Comparative Examples 21, 24 and 26, which incorporated a dispersing agent comprising an alkyl methacrylate-based polymer composed mainly of a methyl methacrylate unit, as a C1 alkyl group outside of the range of the invention, had inferior pigment dispersibility and inferior molded outer appearance. In addition, the molded sheet obtained in Comparative Example 22, which incorporated a dispersing agent comprising an alkyl methacrylate-based polymer with a weight-average molecular weight of 170,000 which was outside of the range of the invention, also had inferior pigment dispersibility and inferior molded outer appearance.

This allowed confirmation that the dispersing agent (A) of the invention exhibits an effect of improving the dispersibility of additives for olefins in obtained molded articles, for a wide range of additives for olefins, and as a result notably improves the effect of addition of the additives.

### Industrial Applicability

Molded articles obtained using the dispersing agent (A) of the invention have excellent addition effects for additives for olefins, and are therefore suitable as sheet materials for optical sheets, as film materials for food films, or for automobile members, household appliance members, medical members or architectural members.

## Claims

1. Use of an alkyl methacrylate-based polymer composed mainly of an alkyl methacrylate (a1) unit with a C2 or greater alkyl group, having a weight-average molecular weight of between 15,000 and 145,000 as measured by gel permeation chromatography, and wherein the content of the alkyl methacrylate-based polymer is 50 mass% or greater to 100 mass% of the total monomer units of the alkyl methacrylate-based polymer, as a dispersing agent (A) for an additive for a polyolefin (B).

2. Use according to claim 1, wherein the (al) unit is an alkyl methacrylate unit wherein the alkyl group is C4.

3. Use according to claim 1, wherein the (a1) unit is an i-butyl methacrylate unit.

4. Use according to any one of claims 1 to 3, wherein the additive for a polyolefin (B) is at least one type selected from among flame retardants, crystal nucleating agents, foaming agents and pigments.

5. Use according to any one of claims 1 to 3, wherein the additive for a polyolefin (B) is at least one type selected from among flame retardants and crystal nucleating agents.

6. Use according to any one of claims 1 to 5, wherein the alkyl methacrylate-based polymer has a weight-average molecular weight of between 15,000 and 100,000.

7. Use according to any one of claims 1 to 5, wherein the alkyl methacrylate-based polymer has a weight-average molecular weight of between 30,000 and 100,000.

8. A polyolefin-based resin composition comprising a dispersing agent (A) for an additive for a polyolefin (B) according to any one of claims 1 to 7, an additive for a polyolefin (B), and a polyolefin-based resin (C).

9. A polyolefin-based resin composition according to claim 8, wherein the additive for a polyolefin (B) is at least one type selected from among flame retardants, crystal nucleating agents, foaming agents and pigments.

10. A polyolefin-based resin composition according to claim 8, wherein the additive for a polyolefin (B) is at least one type selected from among flame retardants and crystal nucleating agents.

11. A polyolefin-based resin composition according to any one of claims 8 to 10, wherein the polyolefin-based resin (C) is a polypropylene resin.

12. A molded article obtainable by molding a polyolefin-based resin composition according to any one of claims 8 to 11.

13. A method for producing a polyolefin-based resin composition according to any one of claims 8 to 11, in which a master batch is preparable with the total amount of the dispersing agent (A) for the additive for a polyolefin (B) and the total amount of the additive for a polyolefin (B), and a portion of the polyolefin-based resin (C), and then the master batch and the remaining portion of the polyolefin-based resin (C) are combined together.

14. The method for producing a polyolefin-based resin composition according to claim 13, wherein the additive for a polyolefin (B) is at least one type selected from among flame retardants, crystal nucleating agents, foaming agents and pigments.

## Patentansprüche

1. Verwendung eines Alkylmethacrylat-basierten Polymers, hauptsächlich zusammengesetzt aus einer Alkylmethacrylat (a1)-Einheit mit einer C2- oder größeren Alkylgruppe, das ein durch Gelpermeationschromatographie gemessenes, gewichtsmittleres Molekulargewicht zwischen 15.000 und 145.000 besitzt, und wobei der Gehalt des Alkylmethacrylat-basierten Polymers 50 Masse% oder mehr beträgt, bezogen auf 100 Masse% der gesamten Monomereinheiten des Alkylmethacrylat-basierten Polymers, als ein Dispergiermittel (A) für ein Additiv für ein Polyolefin (B).

2. Verwendung nach Anspruch 1, wobei die (a1)-Einheit eine Alkylmethacrylateinheit ist, worin die Alkylgruppe C4 ist.

3. Verwendung nach Anspruch 1, wobei die (a1)-Einheit eine i-Butylmethacrylateinheit ist.

4. Verwendung nach mindestens einem der Ansprüche 1 bis 3, wobei das Additiv für ein Polyolefin (B) mindestens ein Typ ist, gewählt aus Flammschutzmitteln, Kristallkeimbildungsmitteln, Schaumbildungsmitteln und Pigmenten.

5. Verwendung nach mindestens einem der Ansprüche 1 bis 3, wobei das Additiv für ein Polyolefin (B) mindestens ein Typ ist, gewählt aus Flammschutzmitteln und Kristallkeimbildungsmitteln.

6. Verwendung nach mindestens einem der Ansprüche 1 bis 5, wobei das Alkylmethacrylatbasierte Polymer ein gewichtsmittleres Molekulargewicht zwischen 15.000 und 100.000 besitzt.

7. Verwendung nach mindestens einem der Ansprüche 1 bis 5, wobei Alkylmethacrylatbasierte Polymer ein gewichtsmittleres Molekulargewicht zwischen 30.000 und 100.000 besitzt.

8. Polyolefin-basierte Harzzusammensetzung, umfassend ein Dispergiermittel (A) für ein Additiv für ein Polyolefin (B) nach mindestens einem der Ansprüche 1 bis 7, ein Additiv für ein Polyolefin (B), und Polyolefin-basiertes Harz (C).

9. Polyolefin-basierte Harzzusammensetzung nach Anspruch 8, wobei das Additiv für ein Polyolefin (B) mindestens ein Typ ist, gewählt aus Flammschutzmitteln, Kristallkeimbildungsmitteln, Schaumbildungsmitteln und Pigmenten.

10. Polyolefin-basierte Harzzusammensetzung nach Anspruch 8, wobei das Additiv für ein Polyolefin (B) mindestens ein Typ ist, gewählt aus Flammschutzmitteln und Kristallkeimbildungsmitteln.

11. Polyolefin-basierte Harzzusammensetzung nach mindestens einem der Ansprüche 8 bis 10, wobei das Polyolefin-basierte Harz (C) ein Polypropylenharz ist.

12. Formkörper, erhältlich durch Formen einer Polyolefin-basierten Harzzusammensetzung nach mindestens einem der Ansprüche 8 bis 11.

13. Verfahren zur Herstellung einer Polyolefin-basierten Harzzusammensetzung nach mindestens einem der Ansprüche 8 bis 11, bei dem eine Vormischung herstellbar ist mit der gesamten Menge des Dispergiermittels (A) für das Additiv für ein Polyolefin (B) und der gesamten Menge des Additivs für ein Polyolefin (B), und einem Teil des Polyolefin-basierten Harzes (C), und dann die Vormischung und der verbleibende Teil des Polyolefin-basierten Harzes (C) miteinander kombiniert werden.

14. Verfahren zur Herstellung einer Polyolefin-basierten Harzzusammensetzung nach Anspruch 13, wobei das Additiv für ein Polyolefin (B) mindestens ein Typ ist, gewählt aus Flammschutzmitteln, Kristallkeimbildungsmitteln, Schaumbildungsmitteln und Pigmenten.

## Revendications

1. Utilisation d'un polymère à base de méthacrylate d'alkyle se composant principalement d'un motif de méthacrylate d'alkyle (a1) avec un groupe alkyle en C2 ou plus, ayant un poids moléculaire moyen en masse compris entre 15 000 et 145 000, comme mesuré par chromatographie par perméation de gel, et dans laquelle la teneur en polymère à base de méthacrylate d'alkyle est supérieure ou égale à 50 % en masse par rapport à 100 % en masse de tous les motifs monomères du polymère à base de méthacrylate d'alkyle, en tant qu'agent de dispersion (A) pour un additif pour une polyoléfine (B).

2. Utilisation selon la revendication 1, dans laquelle le motif (a1) est un motif de méthacrylate d'alkyle dans lequel le groupe alkyle est en C4.

3. Utilisation selon la revendication 1, dans laquelle le motif (a1) est un motif de méthacrylate d'i-butyle.

4. Utilisation selon l'une quelconque des revendications 1 à 3, dans laquelle l'additif pour une polyoléfine (B) est au moins un type sélectionné parmi les ignifuges, les agents de nucléation cristallins, les agents moussants et les pigments.

5. Utilisation selon l'une quelconque des revendications 1 à 3, dans laquelle l'additif pour une polyoléfine (B) est au moins un type sélectionné parmi les ignifuges et les agents de nucléation cristallins.

6. Utilisation selon l'une quelconque des revendications 1 à 5, dans laquelle le polymère à base de méthacrylate d'alkyle a un poids moléculaire moyen en masse compris entre 15 000 et 100 000.

7. Utilisation selon l'une quelconque des revendications 1 à 5, dans laquelle le polymère à base de méthacrylate d'alkyle a un poids moléculaire moyen en masse compris entre 30 000 et 100 000.

8. Composition de résine à base de polyoléfine comprenant un agent de dispersion (A) pour un additif pour une polyoléfine (B) selon l'une quelconque des revendications 1 à 7, un additif pour une polyoléfine (B) et une résine à base de polyoléfine (C).

9. Composition de résine à base de polyoléfine selon la revendication 8, dans laquelle l'additif pour une polyoléfine (B) est au moins un type sélectionné parmi les ignifuges, les agents de nucléation cristallins, les agents moussants et les pigments.

10. Composition de résine à base de polyoléfine selon la revendication 8, dans laquelle l'additif pour une polyoléfine (B) est au moins un type sélectionné parmi les ignifuges et les agents de nucléation cristallins.

11. Composition de résine à base de polyoléfine selon l'une quelconque des revendications 8 à 10, dans laquelle la résine à base de polyoléfine (C) est une résine de polypropylène.

12. Article moulé pouvant être obtenu par moulage d'une composition de résine à base de polyoléfine selon l'une quelconque des revendications 8 à 11.

13. Procédé de production d'une composition de résine à base de polyoléfine selon l'une quelconque des revendications 8 à 11, dans lequel un mélange maître peut être préparé avec la quantité totale de l'agent de dispersion (A) pour l'additif pour une polyoléfine (B) et la quantité totale de l'additif pour une polyoléfine (B), et une partie de la résine à base de polyoléfine (C) et ensuite le mélange maître et la partie restante de la résine à base de polyoléfine (C) sont combinés ensemble.

14. Procédé de production d'une composition de résine à base de polyoléfine selon la revendication 13, dans lequel l'additif pour une polyoléfine (B) est au moins un type sélectionné parmi les ignifuges, les agents de nucléation cristallins, les agents moussants et les pigments.
